# EUROPÄISCHE PATENTANMELDUNG

(11) **EP 2 527 137 A1**
(43) Veröffentlichungstag der Anmeldung: **28.11.2012**
(21) Anmeldenummer: 12169026.7
(22) Anmeldetag: 23.05.2012
(51) Int. Cl.: B32B 5/00, B32B 15/00, B32B 15/14, A62C 2/00, F16L 5/04, E04B 1/94

(54) **Rauchschutzabschottung**

(30) Priorität: 26.05.2011 DE 102011102523
(71) Anmelder: Bohle Brandschutz GmbH, 51645 Gummersbach (DE)
(72) Erfinder: Bittner, Clemens, 51645 Gummersbach (DE)
(74) Vertreter: von Kreisler Selting Werner

(57) **Zusammenfassung**

Gegenstand der Erfindung ist eine Rauchschutzabschottung an warmgängigen Rohrleitungen zur Verhinderung der Rauchgasweiterleitung von einem ersten Brandabschnitt zu einem zweiten Brandabschnitt mit einer Rohrdurchführung in einer Brandschutzwand.

## Beschreibung

Gegenstand der Erfindung ist eine Rauchschutzabschottung an warmgängigen Rohrleitungen zur Verhinderung der Rauchgasweiterleitung von einem ersten Brandabschnitt oder Rauchabschnitt zu einem zweiten Brandabschnitt oder Rauchabschnitt mit einer Rohrdurchführung in einer Brandschutzwand.

Insbesondere in Industrieanlagen oder im Kraftwerksbau ist es erforderlich, verschiedene Brandabschnitte beispielsweise innerhalb eines Gebäudes, zwischen denen warmgängige Rohrleitungen verlaufen (Rohrleitungen mit Bewegung), voneinander abzutrennen. Warmgängige Rohrleitungen sind insbesondere **dadurch gekennzeichnet, dass** sie bedingt durch das Temperaturniveau der darin transportierten Medien Größenänderungen in allen drei Raumachsen erfahren. Sie sind üblicherweise freischwebend an einzelnen Punkten aufgehängt. Gebäude werden in Brandabschnitte aufgeteilt, um im Brandfall die Brandausbreitung zu verhindern und somit die Schäden eines Brandes auf einzelne Brandabschnitte zu begrenzen.

Zur Vermeidung der Brandausbreitung werden die Trennwände oder auch Decken zwischen Brandabschnitten als Brandschutzwand oder - Decke ausgeführt. Die brandschutztechnische Anforderung an die Brandschutzwand oder -Decke kann je nach Notwendigkeit verschieden sein.

DE 10 2008 00 420 A1 betrifft eine Leitungsdurchführung zum Durchführen von Leitungen durch ein Bauteil. Beschrieben wird eine Leitungsdurchführung, die ein umfänglich geschlossenes Gehäuse aufweist, das einen Durchführraum für die Leitungen für die Leitungen umgibt. Im Gehäuse sind eine Einlage aus intumeszierenden Material, ein erstes, membranartiges und mit einer Durchtrittstelle versehenes erstes Dichtelement aus einem elastischen Material sowie ein weiteres membranartiges und mit einer Durchtrittsöffnung versehenes Dichtelement aus einem textilen Flachmaterial vorgesehen, das eine Übergangstemperatur von mindestens 600 °C aufweist. Das innen zylindrische und außen kegelstumpfförmige Gehäuse wird mit einer Art Bajonettverschluss an der Wand befestigt und trennt somit die Räume.

EP 2 047 982 A1 beschreibt ein flächiges Brandschutzmaterial.

Für das technische Gebiet der warmgängigen Rohrleitungen im Industriebau, insbesondere im KraftwerksbauEs wurde bisher vorgeschlagen, den Ringspalt um die Rohrleitung in einer Brandschutzwand mit flexiblem Isolationsmaterial, beispielsweise Glaswolle oder Steinwolle abzudichten. Hierbei ist jedoch eine Rauchschutzabschottung nicht im gewünschten Maße gewährleistet.

Die Aufgabe der vorliegenden Erfindung besteht daher in der Vermeidung von Brandgasweiterleitungen für den speziellen Anwendungsfall an warmgängigen Rohrleitungen bzw. Rohrleitungen mit Bewegung.

Gegenstand der vorliegenden Erfindung ist eine Rauchschutzabschottung 1 an warmgängigen Rohrleitungen 2 zur Verhinderung der Rauchgasweiterleitung von einem ersten Brandabschnitt oder Rauchabschnitt zu einem zweiten Brandabschnitt oder Rauchabschnitt mit einer Rohrdurchführung in einer Brandschutzwand 3, die
**dadurch gekennzeichnet ist, dass**
die Brandschutzwand 3 im Bereich der Rohrdurchführung eine Blechverkleidung 4 mit wenigstens einem Ausschnitt für die Rohrdurchführung mit einem Luftspalt zwischen Rohrleitung 2 und Blechverbekleidung 4 aufweist,
die Ausschnittkante einen senkrecht zur Blechverbekleidung 4 und parallel zur Rohrleitung 2 verlaufenden Blechkragen 5 zur Befestigung eines Rauchschutzkompensators 6 aufweist,
wobei der Rauchgaskompensator 6 aus einem trichterförmigen Silikon-beschichteten Glasfasertuch besteht, dessen größter Radius dem Radius des Blechkragens 5 und dessen kleinster Radius dem der Rohrleitung 2 oder dessen Isolierung entspricht.

Mit Hilfe der vorliegenden Erfindung wird die Rauchgasweiterleitung von einem Brandabschnitt oder Rauchabschnitt zu nächsten verhindert. Im Brandfall wird der Brand abgewandte Bereich zur Rettung von Personen bzw. zur Brandbekämpfung von Brandgasen freigehalten. Die erfindungsgemäße Rauchschutzabschottung verhindert zuverlässig die Weiterleitung von Rauchgasen, ohne dass die Einrichtungen durch die Bewegungen der Rohrleitungen im Normalbetrieb beschädigt oder beeinträchtigt werden. Die erfindungsgemäßen Rauchschutzabschottungen kommen bei der Anforderung an die "Verhinderung der Übertragung von Rauchgas" zum Einsatz und verhindern die Rauchgasweiterleitung bei Rohrdurchführungen.

Die Bauteilöffnung in der Brandschutzwand 3 wird mit einer einteiligen oder mehrteiligen Blechverkleidung 4 verschlossen, die im Bereich der Rohrdurchführung wenigstens einen beispielsweise kreisförmigen Ausschnitt aufweist, wobei die Größe des Ausschnitts so gewählt ist, dass ein Luftspalt zwischen Rohrleitung 2 und BlechbekleidungBlechverkleidung 4 entsteht. Die Breite des Luftspalts ist entsprechend der Rohrleitungsbewegung zu wählen. Die Blechverkleidung 4 weist insbesondere an der Ausschnittkante weist einen, insbesondere etwa 5 cm breiten senkrecht zu dieser und parallel zur Rohrleitung 2 verlaufenden Blechkragen 5 auf, an dem ein Rauchschutzkompensator 6 befestigt wird. Der Rauchschutzkompensator 6 besteht aus einem im Wesentlichen trichterförmigen, insbesondere kegelstumpfförmigen Silikon-beschichteten Glasfasergewebetuch, dessen größter Radius dem Radius des Blechkragens 5 und dessen kleinster Radius dem der Rohrleitung 2 oder dessen Isolierung entspricht bzw. daran angepasst ist.

Der Begriff "Brandschutzwand" im Sinne der vorliegenden Erfindung umfasst auch Trennwände, Trenndecken oder Rauschschutztrennwände, Rauchschutztrenndecken, durch die eine Randschutzabtrennung bewirkt wird. Analoges gilt entsprechend für den Begriff "Brandabschnitt".

Beispielsweise besteht der Rauchschutzkompensator 6 aus zwei, etwa 100 mm breiten Ringen aus dem insbesondere beschichteten Glasfasertuch, wobei sich die Durchmesser zum einen aus dem Durchmesser des Blechkragens 5 der Blechverkleidung 4 und zum anderen aus dem Durchmesser der Rohrleitung 2 oder dessen Isolierung ergeben. Beide Stoffringe werden mit einem Trichterformstück verbunden und miteinander vernäht. Auch die Ausführung des Trichters ist entsprechend der Rohrleitungsbewegung zu wählen und anzufertigen.

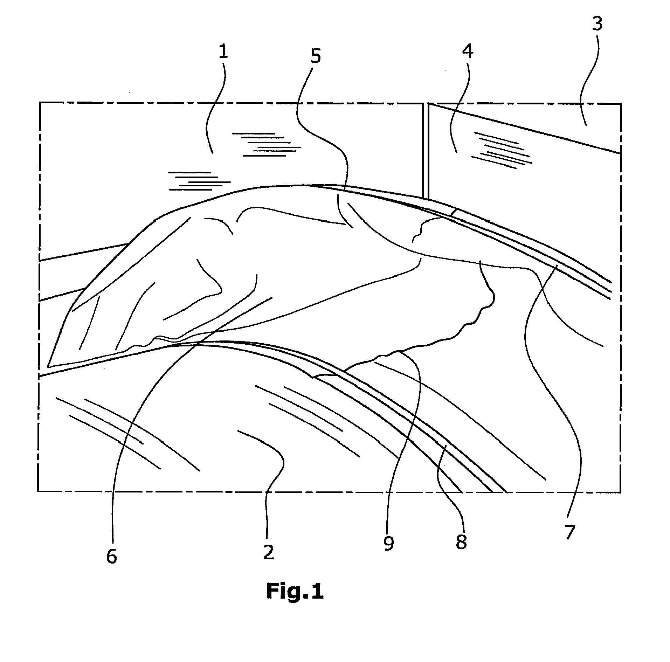

In der Fig. 1 ist eine erfindungsgemäße Rauchschutzabschottung 1 dargestellt. Die Rohrleitung 2 oder dessen Isolierung verläuft senkrecht zu der Brandschutzwand 3 und befindet sich in der hier nicht dargestellten Rohrdurchführung, die durch die Blechverkleidung 4 verdeckt ist. Die warmgängige Rohrleitung 2 sowie gegebenfalls dessen Isolierung muss sich zwischen dem ersten und dem zweiten Brandabschnitt frei bewegen können.

Auf der Seite des hier dargestellten zweiten Brandabschnitts ist die Brandschutzwand 3 mit einer hier mehrteiligen Blechverkleidung 4 versehen, die einen Blechkragen 5 aufweist, an dem der Rauschutzkompensator 6 mit einem Metallband 7 befestigt ist. Mit dem weiteren Metallband 8 wird der Rauchschutzkompensator 6 an der Rohrleitung oder dessen Isolierung befestigt. Dadurch ist die Beweglichkeit der Rohrleitung 2 oder dessen Isolierung insbesondere in allen Raumachsen gewährleistet.

Alternativ ist es auch möglich, die Blechverkleidung 4 im Bereich des ersten Brandabschnitts vorzusehen, jedoch ist hier die Durchführung des Rauchgaskompensators 6 durch die Bauteilöffnung aufwäendig.

In einer dritten Variante kann die Blechverkleidung 4 auch im Bereich des ersten Brandabschnitts vorgesehen sein und sich der Gesamtaufbau von der Brandschutzwand in das Innere dieses Brandabschnitts erstrecken. Die vorliegende Erfindung, insbesondere Anspruch 1 ist auch in diesem Sinne zu verstehen.

Der Rauchgaskompensator 6 weist darüber hinaus vorzugsweise eine Längsnaht 9 auf, die beispielsweise mit einem Klettverschlussband verschlossen ist. Die Längsnaht 9, gegebenenfalls auch mehrere Längsnähte 9 befinden sich vorzugsweise auf einer Achse und werden beispielsweise mit einem Klett- und Flauschband verbunden, wobei die Längsüberlappung in Erstreckung der Rohrleitung 2 beispielsweise 100 mm beträgt. Dadurch ist eine einfache De- und Remontage bei Wartungsarbeiten an Wärmeschutz-isolierten Rohrleitungen 2 möglich. Das System ist wartungsfrei;, für die De- und Remontage ist kein Fachpersonal erforderlich. Alternativ können auch mehrere, insbesondere parallel zu der Rohrleitung 2 verlaufende Längsnähte 9 vorhanden sein.

In einer besonders bevorzugten Ausführungsform der vorliegenden Erfindung besteht der Rauchgaskompensator 6 aus wenigstens zwei ringförmigen Abschnitten unterschiedlicher Durchmesser, die mit einem trichterförmigen Formstück verbunden sind. Werden entsprechend mehrere ringförmige Abschnitte unterschiedlicher Durchmesser eingesetzt, so sind dann auch gegebenenfalls mehrere trichterförmige Formstücke zur Anpassung der Durchmesser erforderlich.

Besonders bevorzugt im Sinne der vorliegenden Erfindung weist der Rauchgaskompensator 6 eine parallel zur Rohrleitung 2 verlaufende Längsnaht 9 auf, die eine einfache Montage des Rauchgaskompensators 6 erlaubt.

Besonders bevorzugt im Sinne der vorliegende Erfindung ist diese Längsnaht 9 mit einem Klettverschlussband verschlossen, um eine schnelle und einfache Demontage oder Remontage zu gewährleisten. Die Metallspannbänder zur Befestigung des Rauchgaskompensators auf dem Blechkragen 5 einerseits und auf der Rohrleitung 2 oder dessen Isolierung andererseits erlauben ebenfalls eine einfache De- bzw. Remontage.

Die vorliegenden Erfindung stellt somit eine kostengünstige Alternative zur R 30 bzw. R 90 Rohrabschottung mit 30 bis 90 min Feuerwiderstand dar.

## Patentansprüche

1. Rauchschutzabschottung (1) an warmgängigen Rohrleitungen (2) zur Verhinderung der Rauchgasweiterleitung von einem ersten Brandabschnitt oder Rauchabschnitt zu einem zweiten Brandabschnitt oder Rauchabschnitt mit einer Rohrdurchführung in einer Brandschutzwand (3),
**dadurch gekennzeichnet, dass**
die Brandschutzwand (3) im Bereich der Rohrdurchführung eine Blechverkleidung (4) mit wenigstens einem Ausschnitt für die Rohrdurchführung mit einem Luftspalt zwischen Rohrleitung (2) und BlechbekleidungBlechverkleidung (4) aufweist,
die Ausschnittkante einen senkrecht zur BlechbekleidungBlechverkleidung (4) und parallel zur Rohrleitung (2) oder dessen Isolierung verlaufenden Blechkragen (5) zur Befestigung eines Rauchschutzkompensators (6) aufweist,
wobei der Rauchgaskompensator (6) aus einem trichterförmigen Silikon-beschichteten Glasfasertuch besteht, dessen größter Radius dem Radius des Blechkragens (5) und dessen kleinster Radius dem der Rohrleitung (2) oder dessen Isolierung entspricht.

2. Rauchschutzabschottung (1) nach Anspruch 1, **dadurch gekennzeichnet, dass** der Rauchgaskompensator (6) aus wenigstens zwei ringförmigen Abschnitten unterschiedlicher Durchmesser besteht, die mit einem trichterförmigen Formstück verbunden sind.

3. Rauchschutzabschottung (1) nach Anspruch 1 oder 2, **dadurch gekennzeichnet, dass** der Rauchgaskompensator (6) eine oder mehrere parallel zur Rohrleitung verlaufende Längsnaht (9) aufweist.

4. Rauchschutzabschottung (1) nach Anspruch 3, **dadurch gekennzeichnet, dass** die Längsnaht (9) mit einem Klettverschlussband verschlossen ist.

5. Rauchschutzabschottung (1) nach einem der Ansprüche 1 bis 4, **dadurch gekennzeichnet, dass** der Rauchschutzkompensator (6) mit Metallspannbändern (8) auf dem Blechkragen (5) einerseits und auf der Rohrleitung (2) oder dessen Isolierung anderseits verspannt ist.
